(19) **Europäisches Patentamt / European Patent Office / Office européen des brevets**

(11) **EP 4 061 594 B1**

(12) **FASCICULE DE BREVET EUROPEEN**

(45) Date de publication et mention
de la délivrance du brevet:
**14.05.2025 Bulletin 2025/20**

(21) Numéro de dépôt: **20803878.6**

(22) Date de dépôt: **16.11.2020**

(51) Classification Internationale des Brevets (IPC):
**B28B 7/02** *(2006.01)* **B28B 7/06** *(2006.01)*
**B29C 33/30** *(2006.01)* **E04G 11/06** *(2006.01)*

(52) Classification Coopérative des Brevets (CPC):
**B28B 7/02; B28B 7/06; B29C 33/308; E04G 11/062**

(86) Numéro de dépôt international:
**PCT/EP2020/082237**

(87) Numéro de publication internationale:
**WO 2021/099259 (27.05.2021 Gazette 2021/21)**

(54) **MOULE POUR FORMER UN MATÉRIAU COMPORTANT UNE SURFACE SE DÉFORMANT SOUS L'ACTION DE TIRANTS ET D'UNE FLASQUE ET SYSTÈME DE COFFRAGE UTILISANT LEDIT MOULE**

**FORM ZUM FORMEN EINES MATERIALS MIT EINER SICH UNTER DER WIRKUNG VON ZUGSTANGEN UND EINER PLATTE VERFORMENDEN OBERFLÄCHE UND SCHALUNGSSYSTEM MIT DIESER FORM**

**MOULD FOR SHAPING A MATERIAL HAVING A SURFACE THAT DEFORMS UNDER THE ACTION OF TIE RODS AND A PLATE AND FORMWORK SYSTEM USING SAID MOULD**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.11.2019 FR 1912963**

(43) Date de publication de la demande:
**28.09.2022 Bulletin 2022/39**

(73) Titulaire: **Aurelien Gicquel**
**44460 Saint-Nicolas-de-Redon (FR)**

(72) Inventeur: **GICQUEL, Aurélien**
**35500 VITRE (FR)**

(74) Mandataire: **Vidon Brevets & Stratégie**
**16B, rue de Jouanet**
**BP 90333**
**35703 Rennes Cedex 7 (FR)**

(56) Documents cités:
| | |
|---|---|
| **AT-B- 331 492** | **AT-B- 331 492** |
| **CN-A- 110 027 096** | **CN-A- 110 027 096** |
| **FR-A- 1 482 107** | **FR-A- 1 482 107** |
| **FR-A1- 2 711 705** | **FR-A1- 2 711 705** |
| **JP-A- H06 170 829** | **JP-A- H06 170 829** |
| **RU-C2- 2 269 412** | **RU-C2- 2 269 412** |

**Description**

**1. DOMAINE DE L'INVENTION**

La présente invention concerne le moulage d'un matériau à l'aide d'un moule lors de son durcissement, le moule comportant une surface déformable. La surface au contact avec le matériau se déforme de manière contrôlée par le fait que la déformation de cette surface s'effectue par des tirants qui se fixent sur la surface et qui se déplace au moyen d'une flasque en rotation.

**2. ARRIÈRE-PLAN TECHNOLOGIQUE**

Autrefois, les maisons étaient construites en pierre, puis la montée des murs a été facilitée par des parpaings que l'on pose les uns sur les autres afin de réaliser des murs droits. Plus récemment encore, et notamment pour les immeubles, les constructeurs utilisent des blocs de béton armé de grande taille qui sont assemblés pour former des murs. Ces blocs de béton sont fabriqués préalablement et amenés sur le lieu de construction, de cette façon l'édification d'un bâtiment est plus rapide qu'avec des matériaux anciens. Dans le cas de murs plans verticaux et d'épaisseur constante, la réalisation de tels blocs s'effectue à l'aide d'un moule formé par des panneaux de coffrage comprenant deux faces parallèles soutenues par une ossature rigide de façon à reprendre les efforts des pressions produites par le béton sous forme liquide. Ces faces sont réalisées à partir de tôles métalliques ou dans certains cas, à l'aide de plaques de contreplaqué. Il est aussi possible de couler sur place le béton dans des moules de coffrages qui délimitent un volume ayant la forme du profil final recherché.

Les pierres et les parpaings présentent l'avantage de réaliser toutes sortes de surface, y compris des surfaces courbes. Dans le cas de constructions en béton, il est possible de disposer de panneaux ayant un rayon de courbure prédéterminé, sur lesquels sont montées des plaques en contreplaqué qui peuvent être cintrées pour venir se fixer sur ce bâti. Un tel dispositif n'est pas satisfaisant car le contreplaqué s'use vite et il faut le remplacer régulièrement ce qui représente un temps d'immobilisation important et un coût non moins important.

De nos jours, les systèmes de cintrage des coffrages, gabarits et moules dotés de surfaces en courbe consistent à rapprocher (pour générer des surfaces convexes), ou éloigner (pour générer des surface concaves) des longerons solidarisés sur la face arrière du moule. Ces dispositifs ont besoin de nombreux vérins qui sont actionnés indépendamment ou par un système de chaîne et de manivelle. Ces vérins sont nombreux, coûteux et complexes à contrôler, de plus ils nécessitent de l'entretien et des opérations de maintenance, telles que du graissage.

Des solutions ont alors été envisagées en associant des tôles avec un bâti articulé de façon à pouvoir régler le rayon de courbure des deux plaques de tôle en les plaçant en vis à vis. Un tel dispositif comprend des poutres verticales, régulièrement espacées le long de la tôle à courber, suivant des génératrices. Ces poutres ont des profils en oméga dont les extrémités sont solidarisées sur les tôles par soudure, d'autres profils sont envisageables comme un « V » inversé. La partie supérieure de ces poutres est connectée à des vérins qui exerce une force de direction quasi parallèle au plan de la tôle. Ces forces ont pour effet de rapprocher ou d'éloigner les extrémités des poutres, et à cintrer la tôle au niveau des points de fixation en lui conférant un certain rayon de courbure.

De tels dispositifs nécessitent un vérin ou une manivelle à chaque point de fixation sur la tôle, ce qui augmente le coût du moule et son poids. De plus, les réglages de chaque vérin ou manivelle sont fastidieux pour obtenir la forme voulue par l'utilisateur du moule.

FR 2 711 705 A1 divulgue un moule pour former un matériau lors de son durcissement comportant:

- une surface déformable dont une première face est destinée à venir en contact avec ledit matériau sous une forme fluide, et
- un ensemble de déformation comprenant au moins une rangée d'au moins deux points de fixation solidarisés sur la seconde face et associés à au moins deux tirants, chacun des au moins deux points de fixation étant rattaché par une première liaison pivot à une extrémité d'un tirant, les au moins deux points de fixation sont fixés à des premières extrémités de longerons, les secondes extrémités desdits longerons étant solidarisées à la seconde face de la surface déformable selon un angle approximativement droit.

**3. OBJECTIFS DE L'INVENTION**

Il existe donc un réel besoin d'un moule permettant de produire une surface courbe en utilisant des moyens mécaniques limités et en rassemblant les moyens d'exercer des forces sur la surface, pour réduire les coûts et le poids.

**4. PRESENTATION DE L'INVENTION**

Pour résoudre au moins en partie certains des inconvénients de l'art antérieur, il est proposé un moule pour former un matériau lors de son durcissement suivant la revendication 1.

Ainsi, l'invention propose une approche nouvelle et inventive permettant de résoudre au moins en partie certains des inconvénients de l'art antérieur. Notamment, le moule peut produire des surfaces de différentes formes, qui seront reproduites par le matériau après son durcissement.

Plus particulièrement, par la mise en œuvre de moules comportant des surfaces déformables et présentant des points de fixation rattachées à une flasque rotative par le biais de tirant, on s'assure de contrôler la déformation de la surface des moules en chaque point de sorte à permettre de produire la forme souhaitée par le matériau après son durcissement.

Selon l'invention, les au moins trois points de fixation sont fixés à des premières extrémités de longerons, les secondes extrémités desdits longerons sont solidarisées à la seconde face de la surface déformable selon un angle approximativement droit, la rotation de ladite flasque provoque un déplacement de la position des premières liaisons et une modification de l'orientation des longerons exerce ainsi des torsions sur ladite surface. De cette manière, les longerons constituent des arcs-boutants amplifiant le phénomène de torsion de la surface. Selon un aspect d'au moins un mode de réalisation, ladite flasque est animée en rotation par un moteur, le moule comportant en outre un support d'un flasque et d'un moteur qui est solidarisé en au moins un point avec ledit moule. De cette manière, la déformation de la surface s'effectue sans effort pour l'opérateur.

Selon un aspect d'au moins un mode de réalisation, l'ensemble de déformation comprend trois points de fixation solidarisés sur la seconde face et associés à trois tirants, caractérisé en ce que chacun des trois points de fixation est rattaché par une première liaison pivot à une extrémité d'un tirant, chaque autre extrémité de tirant étant reliée à une flasque rotative par une seconde liaison pivot, la rotation de ladite flasque provoquant un déplacement de la position des premières liaisons pivot et une modification de la distance entre ces premières liaisons pivots déclenchant une déformation de la planéité de la dite surface, les tirants se déplaçant sous l'action de la rotation d'une même flasque rotative.

Selon un aspect d'au moins un mode de réalisation, les points de fixation sont répartis régulièrement sur la deuxième surface.

De cette manière, cela peut permettre de faciliter l'homogénéisation des efforts exercés par les tirants sur la surface déformable.

Selon un aspect d'au moins un mode de réalisation, le moule comporte une pluralité de rangées de points de fixation, les tirants associés à une même rangée de points de fixation se déplaçant sous l'action de la rotation d'une même flasque, ledit moule comportant autant de flasques que de rangées de points de fixation. De cette manière, avec un seul moteur, il est possible d'exercer des déformations contrôlées sur plusieurs points de la surface.

Selon un aspect d'au moins un mode de réalisation, chaque flasque est animée en rotation par sa propre motorisation. De cette manière, la déformation peut être finement appliquée de point en point ce qui autorise un très grand nombre de profils courbes réalisable.

Selon un aspect d'au moins un mode de réalisation, les plans d'au moins deux flasques du moule se coupent, de préférence à angle droit. De cette manière, il est possible de réaliser des surfaces constituant une partie d'un dôme.

Selon un aspect d'au moins un mode de réalisation, le moule comprend une pluralité d'ensembles de déformation régulièrement espacés sur ladite seconde face de la surface déformable.

De cette manière, cela permet faciliter l'homogénéisation des efforts exercés par les ensembles sur la surface déformable.

Selon un aspect d'au moins un mode de réalisation, lesdits ensembles de déformation sont ménagés dans des plans sensiblement parallèles entre eux.

Il est décrit également un ensemble de déformation pour moule selon l'un des modes de réalisation précités, ledit ensemble comprenant au moins une rangée d'au moins deux points de fixation solidarisés sur la seconde face et associés à au moins deux tirants, caractérisé en ce que chacun des au moins deux points de fixation est rattaché par une première liaison pivot à une extrémité d'un tirant, chaque autre extrémité de tirant étant reliée à une flasque rotative par une seconde liaison pivot, la rotation de ladite flasque provoquant un déplacement de la position des premières liaisons pivot et une modification de la distance entre ces premières liaisons pivots déclenchant une déformation de la planéité de la dite surface, les tirants associés à une même rangée de points de fixation se déplaçant sous l'action de la rotation d'une même flasque rotative.

Il est décrit également un procédé de dimensionnement d'un moule pour former un matériau lors de son durcissement, comprenant les étapes successives suivantes :

- détermination d'une forme souhaitée à appliquer à la surface déformable ;
- détermination d'un matériau de la surface déformable ;
- détermination d'un nombre de points de fixation nécessaire à placer sur la surface de sorte à la déformer ;
- détermination de l'épaisseur de la surface déformable à mettre en œuvre de sorte à permettre l'utilisation dudit matériau composant cette surface avec la forme souhaitée et le nombre de points de fixation déterminés.

Il est à noter que la forme souhaiter peut par exemple être un arc de cercle, une sinusoïde, une droite ou une parable par exemple.

Quant au matériau de la surface déformable, il peut être déterminé notamment en fonction des conditions environnementales et des déformations à atteindre.

Le nombre de points de fixations sur la surface déformable servant à déformer cette surface déformable permet notamment de déterminer le nombre de systèmes trois-barres composant chacun des moules.

L'étape de détermination de l'épaisseur de la surface déformable permet, en d'autres termes, de permettre l'utilisation dudit matériau composant cette surface dans le régime mécanique souhaité, élastique ou plastique.

Selon un aspect d'au moins un mode de réalisation, l'étape de détermination de la forme souhaitée à appliquer sur la surface comprend une étape de détermination de la trajectoire complète de la surface déformable en fonction de la forme souhaitée et d'une plage d'amplitudes atteignables.

Il est à noter que la plage d'amplitudes atteignables peut par exemple dépendre du matériau durcissable et de matériaux disponibles pour former la surface déformable.

## 5. DESCRIPTION DES FIGURES

D'autres caractéristiques et avantages de l'invention apparaîtront à la lecture de la description suivante, donnée à titre d'exemple indicatif et non limitatif, et des dessins annexés, dans lesquels :

[Fig. 1]: la figure 1 représente vue du dessus un système de coffrage constitué de deux moules selon un exemple de réalisation ;

[Fig. 2]: la figure 2 présente une variante de réalisation dans laquelle le support de la flasque est solidarisé avec un point de fixation du moule ;

[Fig. 3] : la figure 3 présente une vue du dessus d'un moule en position de repos selon une variante de réalisation ;

[Fig. 4] : la figure 4 présente une vue du dessus d'un moule présentant une surface concave selon la même variante de réalisation ;

[Fig. 5] : la figure 5 représente est une vue du dessus d'un moule présentant une surface convexe selon la même variante de réalisation ;

[Fig. 6] : la figure 6 présente une vue en perspective d'un moule ayant une surface déformable sous l'action de plusieurs systèmes trois-barres ;

[Fig. 7] : la figure 7 représente une variante de réalisation d'un moule comportant plusieurs flasques animées en rotation par leur propre motorisation ;

[Fig. 8] : la figure 8 représente en perspective une surface déformée par deux systèmes trois-barres dont les plans se coupent à angle droit ;

[Fig. 9] : la figure 9 présente le modèle mathématique d'un moule possédant un ensemble de déformation.

## 6. DESCRIPTION DETAILLEE D'UN MODE DE REALISATION

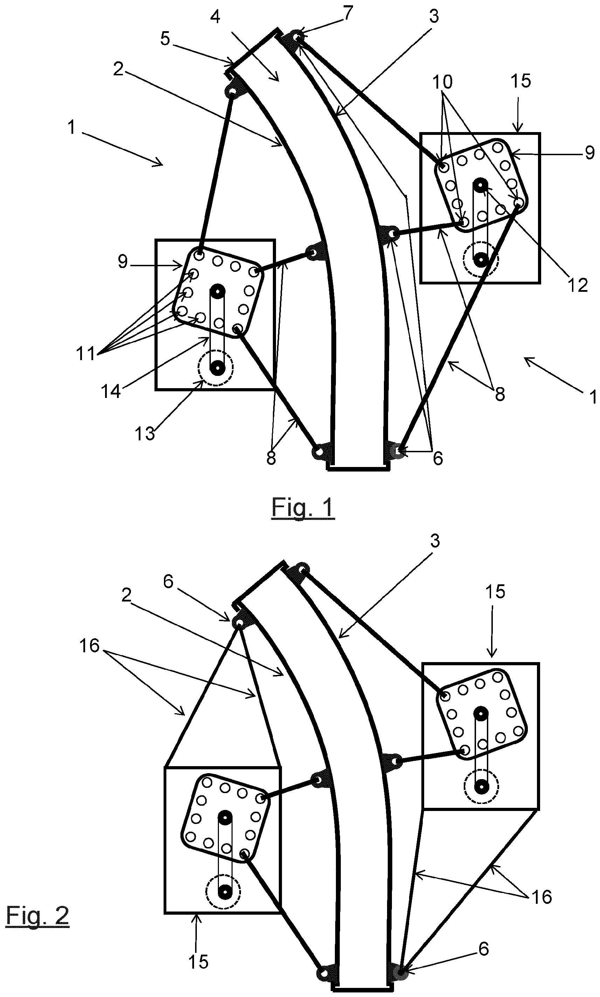

La **Fig. 1** représente en vue du dessus un dispositif, ou système, de coffrage constitué de deux moules, selon un exemple de réalisation. Chacun de ces moules 1 comporte une surface déformable concave 2 et une surface déformable convexe 3, les qualificatifs « concave » et « convexe » étant pris arbitrairement compte tenu de la position du dispositif telle que représentée sur la figure.

Selon une autre position du dispositif, la surface 2 peut être plutôt convexe et la surface 3 peut être plutôt concave. Le présent dispositif permet de créer une cavité 4 s'étendant en hauteur entre les deux surfaces déformables 2 et 3, les chants latéraux des deux surfaces déformables pouvant être fermés par une paroi 5 en forme de « U ».

De cette manière, les premières faces des moules sont placées en vis à vis, et l'espace ménagé entre les dites premières faces qui est destiné à contenir le matériau sous sa forme fluide forme la cavité 4,

La présente invention permet de modifier la planéité d'une surface 2 ou 3 avec l'aide d'un moyen mécanique. Cette surface constitue un moule destiné à contenir un matériau qui se présente d'abord sous une forme fluide et qui se solidifie ensuite. Ce matériau est typiquement du béton, le dispositif de coffrage illustré par la Fig. 1, permet notamment de fabriquer des parois en béton dont la surface est courbe.

Ce mécanisme pour déformer une surface peut être utilisé dans d'autres applications qui nécessitent une modification de la planéité d'une surface, par exemple un moule pour réaliser des pièces en creux, un système d'ouverture et de fermeture de trémies, de bennes, de réservoirs, d'écluses..., un moyen pour colmater un trou dans une coque d'un navire en y appliquant dessus une surface qui vient parfaitement épouser la coque, un moyen de préhension de pièces de formes diverses, ...

Ce mécanisme pour déformer une surface est aussi utilisable pour modifier l'ensemble du profil d'une aile d'avion : longueur de corde, épaisseur, flèche et ainsi l'angle d'incidence par un seul même mécanisme), de manière à en modifier les caractéristiques de portance et de trainée pendant les différentes phases de vol. Tous les éléments du mécanisme de déformation de l'aile, y compris l'actionneur, sont logés dans l'épaisseur de l'aile. Le mécanisme en lui-même : arbres, flasques, tirants ou bielles, sert de structure à ladite aile remplaçant ainsi les traditionnelles nervures.Chaque moule objet de la présente invention comporte une surface déformable 2 ou 3, et au moins un ensemble de déformation comprenant au moins une rangée d'au moins deux points de fixations points de fixation 6 sur la face opposée à celle destinée à contenir un matériau. Chacun de ces points de fixation 6 est rattaché par une liaison pivot 7 à une extrémité d'un des tirants 8, qui sont typiquement des barres rectilignes d'une longueur déterminée. L'autre extrémité de chaque tirant 8 est reliée à une flasque rotative 9 par une seconde liaison pivot 10. La flasque 9 dispose d'une pluralité de trous 11 placés de préférence en périphérie. Les extrémités des tirants 8 comportent un picot de section circulaire et dont l'axe est perpendiculaire à celui du tirant, le picot se logeant dans un trou 11 constitue une liaison pivot. La flasque 9 dispose d'un axe de rotation 12 qui tourne avec l'aide d'un moteur 13. Une courroie **14** relie un tambour de la flasque à une poulie placée sur le moteur, mais tout autre système d'entrainement convient pour faire tourner la flasque 9, notamment un système manuel à manivelle ou une motorisation entraînant une crémaillère. Ce système d'entrainement doit être suffisamment puissant pour déformer la surface 2 ou 3. La flasque rotative 9 et le moteur 13 sont fixés à un support 15 qui reprend les forces de torsion s'exerçant sur les tirants 8.

En tournant, la flasque 9 exerce des tractions et des pressions sur les tirants 8 qui déplacent alors la position des liaisons pivot 7, ce qui entraîne une modification de la distance entre ces premières liaisons pivots et une déformation de la planéité de ladite surface.

Les surfaces 2 et 3 sont de préférence de la tôle, ce qui n'exclut pas d'utiliser d'autres matériaux tel que le bois, sous la forme de panneaux de contreplaqué. Le bois présente l'avantage de ne pas être coûteux mais a l'inconvénient de laisser un état de surface moins lisse que la tôle, et de s'user plus vite. D'autres matériaux plastiques peuvent aussi convenir, comme des feuilles de PVC. Les surfaces qui se déforment sous la pression des points de fixation ont de préférence une épaisseur suffisamment importante pour reprendre la pression du matériau qui vient à leur contact et qui se présente sous forme fluide. On notera que les surfaces doivent être flexibles mais n'ont pas besoin d'avoir un comportement élastique et de prendre une position de repos, les tirants pouvant constamment contrôler la planéité de la surface sous l'action d'un moteur ou d'un dispositif manuel.

La présence de trous 10 non utilisés sur la flasque pour des liaisons pivot permet d'augmenter la précision du réglage de torsion et de faire varier l'amplitude de la déformation appliquée à la surface. Le positionnement dans l'un ou l'autre de ces trous permet aussi d'utiliser des tirants de différentes longueurs. Il est bien évident, et on le verra dans la suite du document, que la flasque 9 peut prendre des formes diverses et quelconques, et que l'axe de rotation n'est pas nécessairement au centre. Avantageusement, l'axe de rotation 12 passe dans un orifice identique aux trous 10, ce qui facilite la fabrication de la flasque.

Chaque moule 1 permet de fléchir la surface associée selon un rayon de courbure déterminée, et selon une longueur déterminée. De tels moules peuvent être disposés de bout en bout de façon à constituer une surface plus grande et pouvant prendre n'importe quelle forme. Il est ainsi possible d'imaginer que les moules 1 qui font l'objet de la présente invention, produisent une forme de vague, la succession de moules présentant alternativement une surface concave puis convexe, puis de nouveau concave, etc.

La **Fig. 2** présente une variante de réalisation dans laquelle le support 15 est solidarisé avec au moins un point de fixation 6 du moule. La solidarisation consiste à relier par des barres rigides 16 le support 15 avec un point de fixation du moule. De cette manière, les efforts appliqués à la surface 2 ou 3 sont repris au niveau du support 15 via les tirants 8. Cette solidarisation consiste en ce que la surface déformable, les tirants, le support et la flasque ainsi que le moteur constituent un ensemble que l'on transporte en bloc.

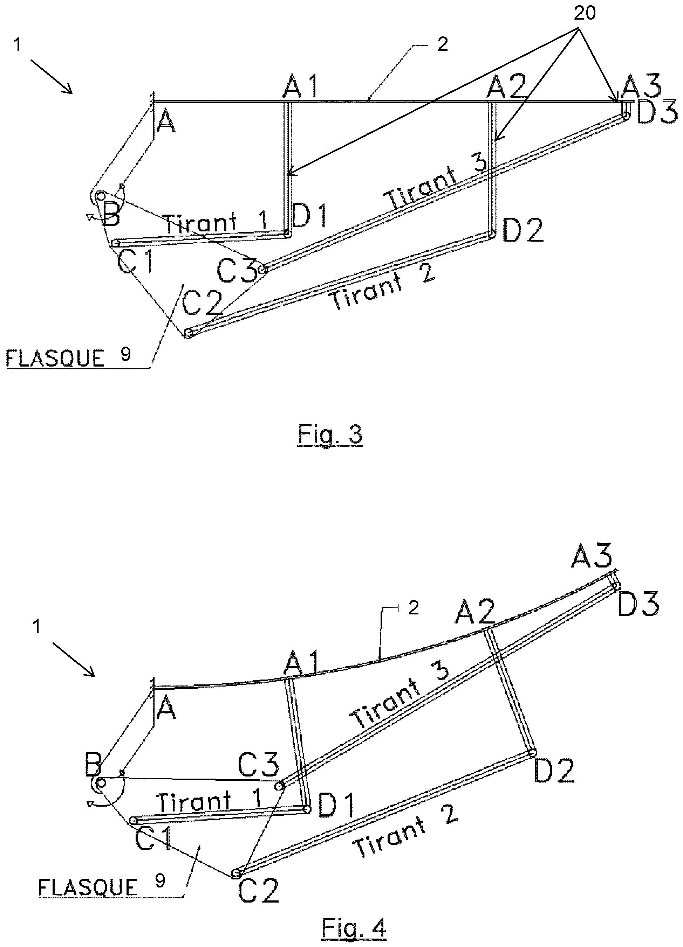

La **Fig. 3** est une vue du dessus d'un moule en position de repos selon une variante de réalisation. Cette variante de réalisation consiste en ce que les points de fixation 6 s'écartent nettement de la surface déformable.

Selon l'exemple représenté, le moule comprend trois tirants 8 et présente trois points de fixation 6 solidarisables sur une seconde face d'une surface déformable dudit moule, chacun des trois points de fixation 6 étant rattaché par une première liaison pivot D1, D2, D3 respective à une extrémité d'un tirant 8 distinct parmi les trois tirants 8, chaque autre extrémité de tirant 8 étant reliée à la flasque rotative 9 par une seconde liaison pivot C1, C2, C3 respective.

Plus particulièrement, ici, des longerons 20 relient l'autre extrémité du tirant aux points de fixation 6 par le biais des liaisons pivot respectivement notées D1, D2 et D3.

. Ce type de mécanisme pour déformer une surface en utilisant trois tirants est également appelé par la suite, un « système trois-barres ».

La surface 2 est encastrée dans un point d'appui fixe noté « A », la flasque 9 est en rotation autour d'un axe noté B qui est solidarisé avec le point d'appui A. Ces deux éléments de fixation peuvent par exemple être montés sur un bâti. Les longerons 20 sont solidement fixés sur la face opposée à celle destinée à contenir le matériau lors de son durcissement, les points de fixation sont notés A1, A2 et A3. La fixation des longerons s'effectue avantageusement par soudure, on peut prévoir des équerres pour rigidifier la liaison entre l'axe de ces longerons et le plan de la surface 2 ou 3, et maintenir cet angle contant. Cet angle est de préférence mais non limitativement à 90 degrés, avec une marge de 5 degrés.

La position décrite sur cette figure est celle au repos prise par la surface 2 (étant entendu qu'elle pourrait être identique pour la surface 3) lorsqu'aucune force n'est appliquée dessus par les tirants. Lorsque la flasque 9 est mise en rotation par un moteur dans le sens inverse des aiguilles d'une montre, alors le tirant noté Tirant 1 va pousser vers la droite la liaison pivot D1 ce qui provoque une remontée du point A1, l'axe du longeron 20 s'inclinant vers la droite provoquant une torsion vers le haut de la surface 2. De même, les Tirant 2 et Tirant 3 subiront le même mouvement et pousseront vers la droite les liaisons pivot D2 et D3, contribuant ainsi à accompagner la flexion de la surface vers le haut et à l'amplifier à mesure que le point sur la surface 2 s'éloigne du point d'appui A.

La **Fig. 4** est une vue du dessus d'un moule présentant une surface concave selon la même variante de réalisation. Cette figure représente une position de la surface 2 lorsque la flasque 9 a tourné dans le sens inverse des aiguilles d'une montre, jusqu'à une position qui peut être celle définie par la limite élastique du matériau de la surface 2.

Comme on peut le voir sur la figure les tirants et les longerons peuvent se croiser, il est donc préférable de les placer dans l'espace sur des plans différents, ces plans étant parallèles à celui de la flasque.

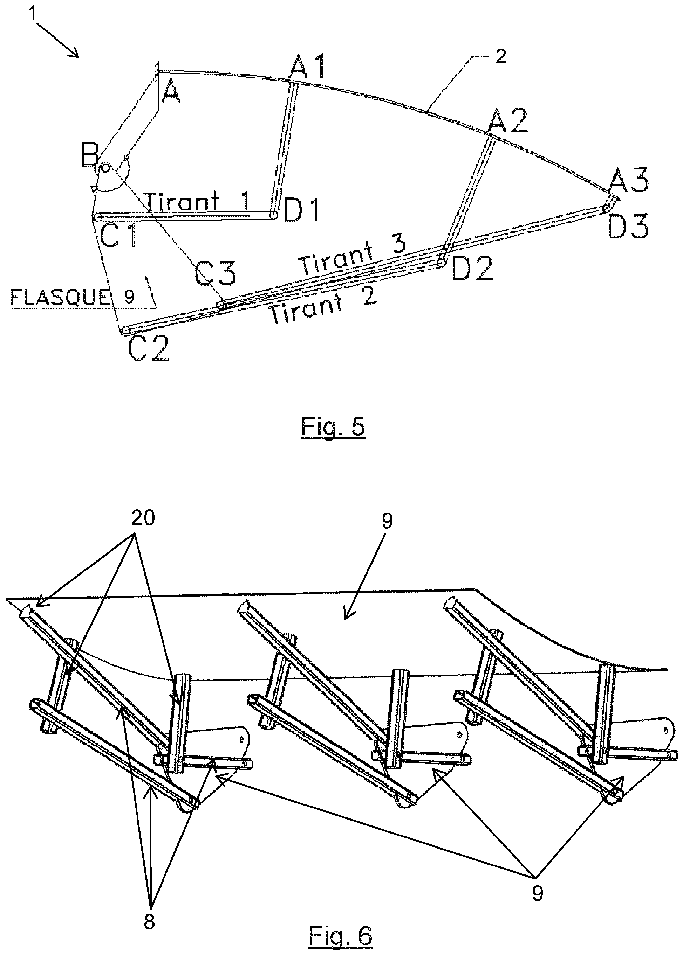

La **Fig. 5** est une vue du dessus d'un moule présentant une surface convexe selon la même variante de réalisation. Cette figure représente une position de la surface 2 lorsque la flasque 9 a tourné dans le sens des aiguilles d'une montre, jusqu'à une position qui peut être celle définie par la limite élastique du matériau de la surface 2. Dans cette position, d'autres tirants et longerons peuvent se croiser.

Les **Fig. 3, 4** et **5** présentent des moules disposant de 3 tirants et 3 longerons en plus d'un point d'appui, selon un exemple préféré de réalisation, permettant une meilleure compacité et un moteur ayant une puissance moyenne. Il est bien évident que le nombre de tirants et de longerons peut varier et qu'en augmentant la taille de la flasque, ce nombre peut être important.

Il est à noter également que le moule peut comprendre une pluralité d'ensemble de déformation.

Par exemple, cette pluralité d'ensembles de déformation peut être placée de sorte que les ensembles de déformation E soient régulièrement espacés sur ladite seconde face de la surface déformable d'un moule.

De cette manière, cela permet faciliter l'homogénéisation des efforts exercés par les ensembles sur la surface déformable.

Par exemple encore, lesdits ensembles de déformation peuvent être ménagés dans des plans sensiblement parallèles entre eux._En ce sens, la **Fig. 6** présente une vue en perspective d'un moule ayant une surface déformable sous l'action de plusieurs systèmes trois-barres, c'est-à-dire un moule présentant une pluralité d'ensemble de déformation E, dotés notamment, dans ce mode de réalisation, de trois tirants. La surface 2 de ce moule supporte plusieurs rangées de points de fixation sur laquelle se fixent autant de longerons 20, eux-mêmes reliés à un même nombre de tirants 8 connectés à une même flasque. De cette manière, il est possible de multiplier les points de fixation et la déformation de la surface 2 est plus précise. La rotation de toutes les flasques d'un tel moule peut être contrôlée par un seul moteur, et de ce fait devient synchrone. De cette manière la déformation produit une surface de type cylindrique.

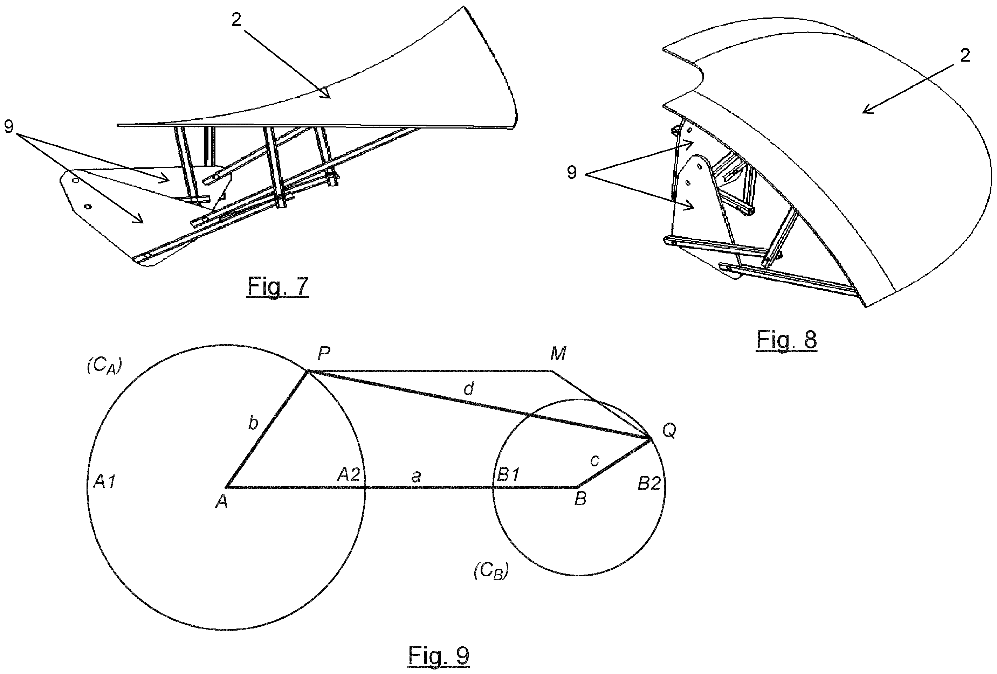

Selon une variante de réalisation qui est illustrée par la **Fig. 7,** chaque flasque 9 est animée en rotation par sa propre motorisation. Les déformations s'effectuent indépendamment de l'endroit où elles s'appliquent et dans des directions différentes. Il est ainsi possible de produire n'importe quel type de surface. Comme on le voit sur cette figure, les flasques que l'on voit dans une direction normale à leur surface, ne sont pas inclinées selon le même angle, en fonction de la rotation que leur impose leur moteur associé.

La **Fig. 8** présente en perspective une surface 2 mise en torsion par deux systèmes trois-barres E, dont les plans se coupent à angle droit, pour produire une forme hémisphérique sur ladite surface. Une telle disposition permet de réaliser des parties de dôme sphérique et, en assemblant un certain nombre de moules de ce type et en les disposant côte à côte, on peut réaliser une surface hémisphérique.

Après avoir montré les différents équipements, nous allons maintenant détailler comment les mettre en œuvre et comment calculer les dimensions des éléments constituant un moule.

Le calcul des éléments constituant un moule se fait par le biais d'un procédé de dimensionnement d'un moule pour former un matériau lors de son durcissement, comprenant les étapes successives suivantes :

- détermination d'une forme souhaitée à appliquer à la surface déformable ;
- détermination d'un matériau de la surface déformable ;
- détermination d'un nombre de points de fixation nécessaire à placer sur la surface de sorte à la déformer ;
- détermination de l'épaisseur de la surface déformable à mettre en œuvre de sorte à permettre l'utilisation dudit matériau composant cette surface avec la forme souhaitée et le nombre de points de fixation déterminés.

Un exemple d'un tel procédé de dimensionnement d'un moule, comporte dans ce mode de réalisation les étapes suivantes :

1 - Déterminer la courbure souhaitée à appliquer sur la surface déformable (ex. arc de cercle, sinusoïde, droite, parabole, etc...).

2 -Déterminer la trajectoire complète d'évolution de la surface, en fonction de la courbure souhaitée et de la plage d'amplitudes atteignables.

3 - Déterminer le matériau de la surface en fonction des conditions environnementales et des déformations à atteindre.

4 - Déterminer le nombre de points de fixations sur la surface servant à la déformer, et donc le nombre de systèmes trois-barres composant le moule.

5 - Dimensionner géométriquement les systèmes trois-barres.

6 - Dimensionner l'épaisseur de la surface déformable, afin de garantir l'utilisation du matériau composant cette surface dans le régime mécanique souhaité, élastique ou plastique.

La **Fig. 9** présentent le modèle mathématique d'un moule possédant un ensemble de déformation. Le moule est donc constitué d'un ensemble de systèmes trois-barres. Le nombre de système trois-barres inclus dans un moule n'est pas imposé, il est au minimum d'un, et dépend de la courbe de la déformation ainsi que de la précision souhaitée. Le moule objet de l'invention déforme la surface dans les plans de chaque système trois-barres, autrement dit le plan contenant au moins celui de la flasque.

Le mécanisme est mis en action par la mise en rotation d'une manivelle d'entrée notée Cb en rotation autour du point « B ». Cette mise en rotation peut s'effectuer avec une poignée ou un moteur actionnant la manivelle (voir segment BQ sur la figure ci-dessous) de chaque système trois-barres. À l'autre extrémité d'un mécanisme trois-barres, se situe un cercle représentant une manivelle de sortie, avec A et P comme point de fixation, cette manivelle étant entraînée en rotation par les tirants représentés par les traits "a" et "d".

Le dimensionnement des systèmes trois-barres est effectué par une méthode d'optimisation. La complexité des équations décrivant le système de cintrage proposé (voir ci-après les équations régissant chaque système trois-barres) ne permet pas de déterminer une solution analytique dont serait dérivée la calibration des (nombreux) paramètres du système. Ainsi, diverses méthodes d'optimisation peuvent être utilisées : graphique à la main (via un logiciel de visualisation géométrique), numérique à la main (via un tableur), numérique automatisé (via un algorithme exécuté par un ordinateur, ...).

Un système trois-barres est régi par l'équation géométrique suivante :

$$a^2 + b^2 + c^2 - d^2 - ab\,cos(t) + 2ac\,cos(u) - 2bc\,cos(u-t) = 0$$

où *a, b, c* et d sont les dimensions du quadrilatère APQB, et *u* et *t* sont respectivement les angles de sortie $\widehat{BAP}$ et d'entrée $\widehat{B_2BQ}$ .

L'équation ci-dessus nous permet d'établir la relation entre la rotation fournie par le moteur situé en B à la manivelle d'entrée BQ, et la rotation fournie à la manivelle de sortie AP.

Le déplacement du point P ainsi imposé contraint la déformation de la tôle. Dans le cas réel, la manivelle AP constitue une fraction de la tôle et est encastrée en A, ainsi le déplacement du point P déforme la tôle.

L'amplitude de déplacement du point P, autour du cercle (CA), est garantie par le respect des inégalités suivantes :

$$a + b \leq c + d \text{ (passage par le point } A_1)$$

$$\big(b + c - (a + d)\big)\big(b + d - (a + c)\big) \geq 0 \text{ (passage par le point } A_2)$$

Les équations ci-dessus doivent être étudiées afin d'assurer que le point P puisse suivre la forme souhaitée de la surface déformable. L'évolution du déplacement du point P de chaque système trois-barres est calibré relativement à celle du point P des autres systèmes trois-barres afin d'imposer la courbure souhaitée de la surface déformable.

Il est à noter que le moule proposé permet de déformer une tôle selon une courbure souhaitée, et cela en obtenant la courbure la plus régulière possible. Un tel moule, et par extension système de coffrage, permet donc que la forme souhaitée avec la courbure souhaitée soit obtenue.

De cette manière, la pièce moulée obtenue pourra par exemple présenter une courbure régulière. Elle pourra également, selon un autre exemple, présenter une courbure progressive.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation et variantes doivent être considérés à titre d'illustration mais peuvent être modifiés dans le domaine défini par la portée des revendications jointes.

## EP 4 061 594 B1

**Revendications**

1. Moule (1) pour former un matériau lors de son durcissement comportant

   - une surface déformable (2 ; 3) dont une première face est destinée à venir en contact avec ledit matériau sous une forme fluide, et

      - un ensemble de déformation comprenant au moins une rangée d'au moins deux points de fixation (6) solidarisés sur une seconde face de ladite surface déformable et associés à au moins deux tirants (8), chacun des au moins deux points de fixation (6) est rattaché par une première liaison pivot (7, D1, D2, D3) à une extrémité d'un tirant (8), chaque autre extrémité de tirant étant reliée à une flasque rotative (9) par une seconde liaison pivot (10, C1, C2, C3), la rotation de ladite flasque provoquant un déplacement de la position des premières liaisons pivot et une modification de la distance entre ces premières liaisons pivots déclenchant une déformation de la planéité de la dite surface (2 ; 3), les tirants (8) associés à une même rangée de points de fixation se déplaçant sous l'action de la rotation d'une même flasque (9) rotative,

   les au moins deux points de fixation (6) sont fixés à des premières extrémités de longerons (20), les secondes extrémités desdits longerons (20) étant solidarisées à la seconde face de la surface déformable selon un angle approximativement droit, la rotation de ladite flasque (9) provoquant un déplacement de la position des premières liaisons et une modification de l'orientation des longerons exerçant ainsi des torsions sur ladite surface (2 ; 3).

2. Moule selon la revendication 1, **caractérisé en ce que** ladite flasque (9) est animée en rotation par un moteur (13), le moule comporte en outre un support (15) d'un flasque et d'un moteur qui est solidarisé en au moins un point avec ledit moule.

3. Moule selon l'une quelconque des revendications précédentes, **caractérisé en ce que** ledit moule comportant autant de flasques que de rangées de points de fixation.

4. Moule selon la revendication 3, **caractérisé en ce que** chaque flasque est animée en rotation par sa propre motorisation.

5. Moule selon l'une des revendications précédentes, **caractérisé en ce qu'**il comprend une pluralité d'ensemble de déformation (E) régulièrement espacés sur ladite seconde face de la surface déformable (2, 3).

6. Moule selon la revendication précédente, **caractérisé en ce que** lesdits ensembles de déformation (E) sont ménagés dans des plans sensiblement parallèles entre eux.

7. Système de coffrage pour matériau durcissable comprenant au moins deux moules selon l'une des revendications 1 à 6, les premières faces étant placées en vis à vis, l'espace ménagé entre les dites premières faces étant destiné à contenir le matériau sous sa forme fluide.

**Patentansprüche**

1. Form (1) zum Formen eines Materials während seiner Aushärtung, umfassend

   - eine verformbare Fläche (2; 3), von der eine erste Seite dazu bestimmt ist, mit dem Material in flüssiger Form in Kontakt zu kommen, und
   - eine Verformungsanordnung, beinhaltend mindestens eine Reihe von mindestens zwei Befestigungspunkten (6), die mit einer zweiten Seite der vorformbaren Fläche fest verbunden und mit mindestens zwei Zugstangen (8) assoziiert sind, wobei jeder der mindestens zwei Befestigungspunkte (6) durch eine erste Gelenkverbindung (7, D1, D2, D3) an einem Ende einer Zugstange (8) angebracht ist, wobei jedes andere Zugstangenende durch eine zweite Gelenkverbindung (10, C1, C2, C3) mit einer drehbaren Platte (9) verbunden ist, wobei die Drehung der Platte eine Verschiebung der Position der ersten Gelenkverbindungen bewirkt und eine Änderung des Abstands zwischen diesen ersten Gelenkverbindungen zu einer Verformung der Ebenheit der Fläche (2; 3) führt, wobei sich die Zugstangen (8), die mit einer gleichen Reihe von Befestigungspunkten assoziiert sind, unter der Wirkung der Drehung einer gleichen drehbaren Platte (9) verschieben,

wobei die mindestens zwei Befestigungspunkte (6) an ersten Enden von Holmen (20) befestigt sind, wobei die zweiten Enden der Holme (20) mit der zweiten Seite der verformbaren Fläche in einem ungefähr rechten Winkel fest verbunden sind, wobei die Drehung der Platte (9) eine Verschiebung der Position der ersten Verbindungen bewirkt und eine Änderung der Ausrichtung der Holme auf diese Weise Torsionen auf die Fläche (2; 3) ausübt.

2. Form nach Anspruch 1, **dadurch gekennzeichnet, dass** die Platte (9) von einem Motor (13) in Drehung versetzt wird, wobei die Form ferner einen Träger (15) für eine Platte und einen Motor umfasst, der an mindestens einem Punkt fest mit der Form verbunden ist.

3. Form nach einem der vorhergehenden Ansprüche, **dadurch gekennzeichnet, dass** die Form genauso viele Platten wie Reihen von Befestigungspunkten umfasst.

4. Form nach Anspruch 3, **dadurch gekennzeichnet, dass** jede Platte durch ihren eigenen Motorisierung in Drehung versetzt wird.

5. Form nach einem der vorhergehenden Ansprüche, **dadurch gekennzeichnet, dass** sie eine Vielzahl von Verformungsanordnungen (E) beinhaltet, die auf der zweiten Seite der verformbaren Fläche (2, 3) gleichmäßig beabstandet verteilt sind.

6. Form nach dem vorhergehenden Anspruch, **dadurch gekennzeichnet, dass** die Verformungsanordnungen (E) in zueinander im Wesentlichen parallelen Ebenen eingerichtet sind.

7. Schalungssystem für ein aushärtbares Material, beinhaltend mindestens zwei Formen nach einem der Ansprüche 1 bis 6, wobei die ersten Seiten gegenüberliegend angeordnet sind, wobei der zwischen den ersten Seiten eingerichtete Raum dazu bestimmt ist, das Material in seiner flüssigen Form aufzunehmen.


**Claims**

1. Mould (1) for shaping a material during hardening thereof, having

   - a deformable surface (2; 3), a first face of which is intended to come into contact with said material in a fluid form, and
   - a deformation assembly comprising at least one row of at least two fastening points (6) secured to a second face of said deformable surface and associated with at least two tie rods (8), each of the at least two fastening points (6) is attached by a first pivot connection (7, D1, D2, D3) to an end of a tie rod (8), each other tie rod end being connected to a rotary plate (9) by a second pivot connection (10, C1, C2, C3), the rotation of said plate causing the position of the first pivot connections to move and the distance between these first pivot connections to be modified, resulting in deformation of the planarity of said surface (2; 3), the tie rods (8) associated with a given row of fastening points moving under the action of the rotation of a given rotary plate (9),

   the at least two fastening points (6) are fastened to first ends of longitudinal members (20), the second ends of said longitudinal members (20) being secured to the second face of the deformable surface at an approximately right angle, the rotation of said plate (9) causing the position of the first connections to move and the orientation of the longitudinal members to be modified, thus applying twists to said surface (2; 3).

2. Mould according to Claim **1, characterized in that** said plate (9) is driven in rotation by a motor (13), the mould also has a support (15) for supporting a plate and a motor and which is secured to said mould at at least one point.

3. Mould according to either one of the preceding claims, **characterized in that** said mould has as many plates as there are rows of fastening points.

4. Mould according to Claim **3, characterized in that** each plate is driven in rotation by its own drive system.

5. Mould according to one of the preceding claims, **characterized in that** it comprises a plurality of deformation assemblies (E) regularly spaced apart on said second face of the deformable surface (2, 3).

6. Mould according to the preceding claim, **characterized in that** said deformation assemblies (E) are formed in planes that are substantially parallel to one another.

7. Formwork system for hardenable material comprising at least two moulds according to one of Claims 1 to 6, the first faces being placed facing one another, the space formed between said first faces being intended to contain the material in its fluid form.

Fig. 1

Fig. 2

Fig. 3

Fig. 4

Fig. 5

Fig. 6

Fig. 7

Fig. 8

Fig. 9

EP 4 061 594 B1

**RÉFÉRENCES CITÉES DANS LA DESCRIPTION**

**Documents brevets cités dans la description**

- FR 2711705 A1